# EUROPEAN PATENT SPECIFICATION

(11) **EP 3 394 915 B1**
(45) Date of publication and mention of the grant of the patent: **24.09.2025**
(21) Application number: 16785033.8
(22) Date of filing: 04.10.2016
(51) Int. Cl.: H01M 6/50, H01M 6/36, H01M 50/124, H01M 50/138, H01M 50/24, H01M 10/658, H01M 50/117, H01M 50/133, H01M 50/119, H01M 10/615, H01M 10/653

(54) **THERMAL AND ELECTRICAL INSULATION COATING FOR USE IN THERMAL BATTERY CASINGS**
THERMISCHE UND ELEKTRISCHE ISOLATIONSBESCHICHTUNG ZUR VERWENDUNG IN THERMISCHEN BATTERIEGEHÄUSEN
REVÊTEMENT ISOLANT THERMIQUE ET ÉLECTRIQUE À UTILISER DANS DES BOITIERS DE BATTERIE THERMIQUES

(30) Priority: 22.12.2015 US 201514978227
(43) Date of publication of application: 31.10.2018
(73) Proprietor: Raytheon Company, Waltham, MA 02451-1449 (US)
(72) Inventor: FETSKO, Thomas E., Tucson AZ 85756 (US); JANTSON, Benjamin L., Huntsville AL 35806 (US)
(74) Representative: Crowell & Moring U.K. LLP
(86) International application number: PCT/US2016/055245
(87) International publication number: WO 2017/112024

(56) References cited:
- WO-A1-2014/191778
- WO-A2-2016/053399
- JP-A- S60 230 363
- KR-A- 20140 022 647
- US-A- 5 590 524
- US-A1- 2002 025 471
- US-A1- 2007 238 008
- US-A1- 2011 014 514
- US-A1- 2011 165 454
- US-A1- 2012 129 022
- US-B2- 6 818 344
- UNIFRAX LLC: "Product Information Sheet Fiberfrax Ceramic Fiber Paper", 7 January 1997 (1997-01-07), pages 1 - 4, XP055837280, Retrieved from the Internet <URL:https://www.unifrax.com/product/fiberfrax-ceramic-fiber-papers/> [retrieved on 20210902]

## Description

### BACKGROUND

The present disclosure relates to thermal batteries and, more particularly, to the thermal insulation of the battery casings, containers, cases, cans, or housings.

A thermal battery is a primary, reserve battery that is employed almost exclusively in military and defense applications. This technology is sought after for these applications because it offers an exceptionally high power density, as well as a maintenance-free storage life often in excess of twenty years. Most recently, the anode employed is a lithium or lithium alloy material, while the cathode is a metal sulfide.

Both the high power density and the long storage life are a result of the battery's electrolyte. The electrolyte is an inorganic salt mixture that is a solid, nonconductive material at normal, ambient conditions but becomes a molten, highly conductive material at elevated temperatures. When the battery is in the inactive state, at temperatures well below the melting point of the electrolyte, the electrolyte's impedance is large enough to virtually eliminate self-discharging within the cell. This results in practically no loss in battery performance after being stored for an extended storage period. Conversely, when the battery is activated and temperatures rise above the melting point of the electrolyte, the electrolyte's impedance decreases significantly. With little resistance to the flow of ions, the battery is able to provide large amounts of power.

Two aspects of a thermal battery design are a) the battery's available capacity, and b) proper thermal management of the battery. The battery design must include enough energetic material so that it has the capacity to provide power for the entire duration of the mission. Ideally, the battery would be designed with additional capacity over what is required in order to ensure margin to the requirement. In addition to designing for capacity needs, the thermal management of the battery design must also be taken into account in order to ensure that the battery's core will stay hot long enough to deliver the required capacity.

As mentioned above, in an activated thermal battery, the electrolyte is in a molten state. The electrolyte transitions from a solid to a molten state during battery activation via the initiation of heat pellets located within the thermal battery cell stack. As the heat pellets burn, they release heat into the surrounding cells that melts the electrolyte, lowering the cell impedance, allowing ions to flow freely. Over time, as heat escapes the battery, the electrolyte may begin to freeze, resulting in increasing impedance and eventually resulting in no ionic conduction.

The thermal management of the system includes both the calorific output of the heat pellets built into the cell stack and the thermal insulation wrapped around the battery cell stack. The calorific output of the heat pellets is responsible for heat released into the system to melt the electrolyte, and the thermal insulation is responsible for the retention of that heat in the system in order to keep the electrolyte molten for as long as possible. In a properly designed thermal battery, the thermal management of the battery system allows for the electrolyte to remain molten long enough for the battery to deliver the required capacity. In a poorly designed thermal battery, the thermal management of the battery system allows for the electrolyte to prematurely cool before the battery delivers the necessary capacity, which results in a failure to meet the battery mission. WO2016/053399A2 relates to a fiber-reinforced aerogel material which can be used as insulation in thermal battery applications. US6818344B2 relates to a thermal battery housed in a chamber that utilizes micro-electromechanical systems (MEMS)-based technology to offer superior chemical stability and advantageous mechanical and thermal properties. US2002/025471A1 relates to a thermal battery including a housing with a plurality of battery cells containing an electrolyte that is in a non-operating condition at ambient temperatures and in an operating condition at elevated temperatures mounted within the housing.

### SUMMARY

The invention comprises a thermal primary battery casing including a thermal primary battery container and a thermal barrier coating (TBC) disposed onto a surface of the thermal battery primary container. The TBC is a thermal insulator and is reinforced with ceramic fibers and particles. The TBC comprises an aerogel material. The thermal primary battery container is configured to house a thermal primary battery comprising a plurality of stacked cells.

The invention further comprises a method of making a thermal primary battery casing including spraying or casting a TBC onto a surface of a thermal primary battery container, wherein the TBC is a thermal insulator. The TBC comprises an aerogel material. The thermal primary battery container is configured to house a thermal primary battery comprising a plurality of stacked cells.

Additional features and advantages are realized through the techniques of the present invention. Other embodiments and aspects of the invention are described in detail herein and are considered a part of the claimed invention. For a better understanding of the invention with the advantages and the features, refer to the description and to the drawings.

### BRIEF DESCRIPTION OF THE DRAWINGS

For a more complete understanding of this disclosure, reference is now made to the following brief description, taken in connection with the accompanying drawings and detailed description, wherein like reference numerals represent like parts:
FIG. 1A is an illustration of a battery casing according to an embodiment.
FIG. 1B is an image of an aerogel coating, reinforced with ceramic fibers and particles according to the invention.
FIG. 2 is a partially cut-away side view of an illustration of a thermal battery according to an embodiment.

### DETAILED DESCRIPTION

The thermal battery's cell stack may be insulated against heat loss by wrapping it with multiple layers of flexible fiberglass sheets or "blankets." The insulated cell stack is then inserted into the battery casing and hermetically sealed. These "blankets" function to insulate the cell stack axially. The number and thickness of thermal insulation "blankets" used will vary depending upon the duration of the operating life (*i.e.,* mission life) because a longer operating life will compel the cell stack to remain hotter longer. The overall thickness of insulation needed can be achieved by wrapping the cell stack with many, thinner "blankets" or a few, thicker "blankets." For long operating lives, the overall thickness of thermal insulation needed increases the battery's diameter by an inch or more. This increase in diameter results in increased weight because a larger steel battery casing is needed to house to larger insulated cell stack. In addition to increased casing material, the larger battery must also be allotted a larger volume within the next higher level assembly.

The use of the flexible fiberglass insulation wrap has also been the source of battery failures. For example, when the fiberglass insulation sheet varies in thickness, uneven cooling in the cell stack may result, and the battery may fail to meet its operating life requirement. In another example, when the fiberglass insulation is damaged upon insertion into the battery casing, the cell stack or battery power leads to the external battery can lead to shorting of the battery.

Therefore, a thermal insulation material that is substantially uniform in thickness and impervious to damage when the cell stack is inserted into the battery casing is desired. In addition, a useful solution would also have a lower thermal coefficient, making it a better thermal insulator than the current standard fiberglass insulation used. The lower thermal coefficient would allow for the thermal insulation layer to be thinner than the fiberglass wrap. This would result in a smaller battery volume for long life thermal battery designs.

Accordingly, disclosed herein are coatings for battery casings, methods of insulating battery casings with such coatings, and methods of using the coated battery casings that address the above challenges. A battery casing includes a battery container and a TBC disposed onto a surface of the battery container. The TBC is substantially uniform in thickness and impervious to damage when the cell stack is inserted into the battery casing. The coating also has a lower thermal coefficient, making it a better thermal insulator than the current standard fiberglass insulation used. The lower thermal coefficient allows for the thermal insulation layer to be thinner than the fiberglass wrap, which results in a smaller battery volume for long life thermal battery designs.

The following definitions and abbreviations are to be used for the interpretation of the claims and the specification. As used herein, the terms "comprises," "comprising," "includes," "including," "has," "having," "contains" or "containing," or any other variation thereof, are intended to cover a non-exclusive inclusion. For example, a composition, a mixture, process, method, article, or apparatus that comprises a list of elements is not necessarily limited to only those elements but can include other elements not expressly listed or inherent to such composition, mixture, process, method, article, or apparatus.

As used herein, the articles "a" and "an" preceding an element or component are intended to be nonrestrictive regarding the number of instances (*i.e.,* occurrences) of the element or component. Therefore, "a" or "an" should be read to include one or at least one, and the singular word form of the element or component also includes the plural unless the number is obviously meant to be singular.

As used herein, the terms "invention" or "present invention" are non-limiting terms and not intended to refer to any single aspect of the particular invention but encompass all possible aspects as described in the specification and the claims.

As used herein, the term "about" modifying the quantity of an ingredient, component, or reactant of the invention employed refers to variation in the numerical quantity that can occur, for example, through typical measuring and liquid handling procedures used for making concentrates or solutions. Furthermore, variation can occur from inadvertent error in measuring procedures, differences in the manufacture, source, or purity of the ingredients employed to make the compositions or carry out the methods, and the like. In one aspect, the term "about" means within 10% of the reported numerical value. In another aspect, the term "about" means within 5% of the reported numerical value. Yet, in another aspect, the term "about" means within 10, 9, 8, 7, 6, 5, 4, 3, 2, or 1% of the reported numerical value.

As used herein, the terms "percent by weight," "% by weight," and "wt.%" mean the weight of a pure substance divided by the total dry weight of a compound or composition, multiplied by 100. Typically, "weight" is measured in grams (g). For example, a composition with a total weight of 100 grams, which includes 25 grams of substance A, will include substance A in 25% by weight.

As used herein, the term "thermal barrier coating" or "TBC" means a coating that reduces heat flow to a metal battery container.

It will also be understood that when an element, such as a layer, region, or substrate is referred to as being "on" or "over" another element, it can be directly on the other element or intervening elements may also be present. In contrast, when an element is referred to as being "directly on" or "directly over" another element, there are no intervening elements present.

Thermal batteries include a plurality of stacked electrochemical cells within a suitable battery casing, which can be a cylindrical metal or metallic alloy. Some battery designs include a soft, flexible insulation blanket surrounding the battery cell stack. However, using a soft, flexible insulation blanket can result in the battery electrical leads penetrating the soft insulation, which can create an electrical short between the leads and the battery casing. Accordingly, the battery casing coating disclosed herein provides various advantages that prevent such electrical shorting problems.

The insulating coating (TBC) will line the interior surface, the exterior surface, or both interior and exterior surfaces, of a battery casing (battery container). The TBC will prevent electrical shorting of the battery leads in a metallic battery container.

The battery containers can include one or more metals. The coating ensures electrical isolation between the battery leads and the metal battery container. The battery containers can include an open top or a closed top. The battery containers also can include an open bottom or a closed bottom. When one or more ends (top or bottom) are open, a cover can be included on the ends, which can include one or more metals. If used, the end covers can also be lined on one or more surfaces (interior and exterior) with the TBC.

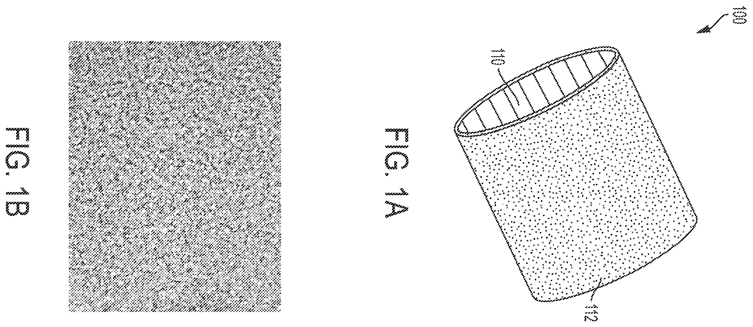

FIG. 1A shows an illustrative battery casing 100. The battery casing houses a battery, such as a thermal battery. However, it will be appreciated that aspects of the present disclosure are not necessarily limited to thermal batteries, and that the battery casing can be used for any type of battery, including, but not limited to any type of reserve batteries (e.g., thermal batteries, liquid oxyhalide batteries).

As mentioned above, the battery container, and optional end covers, can made of a metal or metal alloy. Non-limiting examples of suitable metals include stainless steel, titanium, titanium alloys, nickel, nickel alloys, nickel-plated steel, aluminum, aluminum alloys, copper, copper alloys, or any combination thereof.

The TBC is disposed onto a surface of the battery casing 100. The TBC is deposited onto the interior surface 110, the exterior surface 112, or both the interior and exterior surfaces 110, 112. The TBC can be deposited directly onto a surface of the battery casing 100, or on top of one or more layers deposited onto the battery casing 100.

FIG. 1B is an exemplary TBC formed of an aerogel material, reinforced with ceramic fibers and particles. The TBC includes an aerogel materials in combination with ceramic fibers and ceramic particles.

The TBC can include one or more layers. The layers can be the same or different. For example, one layer can be a bond coat and another layer can be a ceramic layer. The bond coat can be a metallic layer made of a nano-structured ceramic-metallic composite that adheres the ceramic layer to the battery container. The bond coat can generate the ceramic layer of thermally grown ceramic oxide, which occurs when the coating is subjected to a high temperature. The ceramic layer forms a uniform, thermally protective barrier by acting as an oxygen diffuser that prevents the battery container from becoming thermally oxidized. The last layer of the coating can be a ceramic top coat made of yttria-stabilized zirconia (YSZ). The afore-mentioned layers can be present in any order or combination. Also, one or more layers of the same coating can be used as the TBC.

The TBC includes an insulating material and forms a thermal barrier. The TBC includes ceramic fibers and particles, that may have a melting point of at least about 2600°F (1426°C); or in a range from about 3450° to about 4980° F (from about 1900°C to about 2750°C).

The TBC can include a ceramic-metal composite. For example, the TBC can include alumina (Al₂O₃) and one or more ceramic materials, such as ceramic oxides. The TBC can include polycrystalline zirconia (ZrO₂)-based ceramics, including yttria-stabilized zirconia (YSZ).

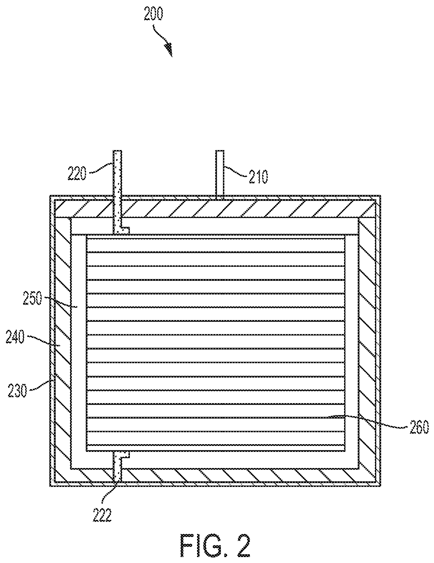

FIG. 2 is a partially cut-away side view of an illustrative assembled battery 200. The assembled battery 200 includes a battery 260 disposed inside a battery container 230 having the TBC 240 on an interior surface of the battery container 230.

The TBC 240 may be applied to the battery container 230 by spraying, which provides a hard, substantially hard, or rigid coating. The TBC can be sprayed onto the surface of the battery container 230 by a machine-controlled spraying process. The TBC 240 can be applied by plasma-spraying, electron beam physical vapor deposition processes, or any combination thereof.

To apply the TBC 240 to the battery container 230, the desired materials, particles, and fibers are combined in an aqueous or non-aqueous solution. The solution could include any non-aerogel material in combination with ceramic or inorganic microspheres and microballoons. Then, the coating is deposited by spraying or casting onto one or more surfaces of the battery container and allowed to dry. Once dry, the TBC 240 forms a substantially rigid, uniform surface. The coating can be machined to final thickness as a secondary process step.

The TBC is applied as a single layer or as a multi-layer stackup. The stackup could employ a different density and/or composition for each layer.

The final TBC 240 (as well as each individual layer) has a substantially uniform thickness and provides a substantially hard surface of the battery container 230. The TBC 240 is impervious to liquid leakage (such as electrolyte leakage). In contrast, using a thermally insulating blanket that is wrapped around the battery inside the battery container cannot provide such a uniform thickness. Because variation in the thermal insulation wrap or blanket's thickness can lead to unintentional cooling of the battery cell stack, and thus decreased performance, the TBC 240 prevents unintentional battery cooling and thus provides increased battery performance.

The hard or substantially hard surface of the TBC 240 provides for many of the above-described advantages. In one aspect, the TBC 240 is not substantially flexible, bendable, or compressible at a mechanical stress less than 200 psi. In another aspect, the TBC 240 is not substantially flexible, bendable, or compressible at a mechanical stress in a range from about 100 to about 200 psi. Yet, in another aspect, the TBC 240 is not substantially flexible, bendable, or compressible at a mechanical stress about or in any range from about 10, 25, 50, 75, 100, 125, 150, 175, or 200 psi.

The TBC 240 has a thickness that generally varies and is not intended to be limited. In one aspect, the thickness is in a range between about 0.031 inch and about 0.250 inch. In another aspect, the thickness is in a range between about 0.040 inch and about 0.150 inch. Yet, in another aspect, the thickness is in a range between about 0.060 inch and about 0.100 inch.

Electrical connections may be made in an appropriate manner by suitable electrical leads and terminals 210, 220, 222 to the respective positive and negative terminals of the upper and lower battery cells in the stack. However, because the TBC 240 is substantially rigid, the battery electrical leads cannot penetrate the TBC 240, which can cause a short circuit. Depending on the thickness of the TBC 240, a space 250 may be present between the battery 260 and the TBC 240 of the battery container 230. However, the assembled battery 200, including the battery 260, TBC 240, and battery container 230 may be designed and dimensioned to minimize the space 250 between the battery 260 and the TBC 240. Although, if an additional insulation is desired, the battery 260 can be wrapped in an additional insulating blanket (not shown), which can fill the optional space 250 between the battery 260 and the TBC 240.

The heat or thermal generating elements for the battery 260, which are generally positioned as a part of each battery cell with or without additional heat generating elements at each end of the battery 260, may be ignited to activate the battery 260 by a suitable electrical match or detonator (not shown) and heat powder or fuse (not shown). The heat powder or fuse can be coupled between the match or detonator and the heating generating elements in each cell. The battery 260 can be formed by initially stacking the individual cell elements to form separate cells, and then the stacked cells are placed within the battery container 230 with the TBC 240 under suitable pressure.

Although the TBC 240 in assembled battery 200 is shown only on the interior surface of the battery container 230, the TBC 240 also can be deposited onto the exterior surface of the battery container 230 (not shown). Optionally, the TBC 240 also is deposited onto the terminal header on top of the battery 230.

Initiating the electrical match, which heats the heat powder and the individual heat generating elements of the cell stack, operates the assembled battery 200. Electrical current flows through leads 210, 220, and 222. It is to be understood that the assembled battery 200 is but an exemplary embodiment. Other embodiments of the assembled battery 200 can be used.

In addition to thermal batteries, the TBC is suitable for battery casings of other types of batteries, for example liquid oxyhalide batteries. Various problems in liquid oxyhalide reserve batteries can be solved by the disclosed TBC. First, electrolytes can escape the battery cell stack and pool in voids between the cell stack and the battery header and the container, which can result in significant current leakage. If the battery has multiple isolated voltage sections, this current leakage could bridge the two isolated sections potentially resulting in a ground shift voltage in the end item. Depending upon the system, this ground shift may result in a system failure. Second, upon insertion of the cell stack assembly into the battery casing, the power lead's electrical insulation can be "skinned" along the metal edge of the battery casing, leading to a shorting between the lead and the battery casing. However, the TBC on the battery container provides a hard, insulating battery casing surface. Thus, the TBC solves these problems by preventing the power leads from "skinning" the metal battery container and providing additional electrical insulation protection of the power leads in case the main layer of electrical insulation is compromised.

As mentioned above, the TBC can be applied to the exterior surface of a battery container. Such an external coating will insulate the battery core from very high external temperatures. This insulation would prove useful for applications where the battery must be used in environments with significant temperatures.

The TBC can be any suitable material or composite that can provide a substantially hard or rigid thermally insulating, non-electrically conducting coating on the interior of a battery container. The TBC is a thermal insulator and an electrical insulator (non-electrically conductive). In one embodiment, the TBC includes an aerogel material. Aerogels are synthetic, porous ultra-light material derived from a gel, in which the liquid component of the gel has been replaced with a gas. Thus, aerogels are solids with extremely low densities and low thermal conductivities.

Aerogels can be made of a variety of materials or components. The TBC can include any aerogel material, materials, or composites. The aerogel material can include inorganic materials, organic materials, or a combination thereof. Non-limiting examples of suitable inorganic aerogel materials silica, titania, zirconia, alumina, hafnia, yttria, ceria, or any combination thereof. Other non-limiting examples of suitable organic aerogel materials include urethanes, resorcinol formaldehydes, polyimide, polyacrylates, chitosan, polymethyl methacrylate, members of the acrylate family of oligomers, trialkoxysilylterminated polydimethylsiloxane, polyoxyalkylene, polyurethane, polybutadiane, melamine-formaldehyde, phenol-furfural, or any combination thereof. Non-limiting examples of suitable organic-inorganic hybrid hydrogels include silica-PMMA, silica-chitosan, silica-polyether, or any combination thereof.
the battery cell stack and pool in voids between the cell stack and the battery header and the container, which can result in significant current leakage. If the battery has multiple isolated voltage sections, this current leakage could bridge the two isolated sections potentially resulting in a ground shift voltage in the end item. Depending upon the system, this ground shift may result in a system failure. Second, upon insertion of the cell stack assembly into the battery casing, the power lead's electrical insulation can be "skinned" along the metal edge of the battery casing, leading to a shorting between the lead and the battery casing. However, the TBC on the battery container provides a hard, insulating battery casing surface. Thus, the TBC solves these problems by preventing the power leads from "skinning" the metal battery container and providing additional electrical insulation protection of the power leads in case the main layer of electrical insulation is compromised.

As mentioned above, the TBC can be applied to the exterior surface of a battery container. Such an external coating will insulate the battery core from very high external temperatures. This insulation would prove useful for applications where the battery must be used in environments with significant temperatures.

The TBC can be any suitable material or composite that can provide a substantially hard or rigid thermally insulating, non-electrically conducting coating on the interior of a battery container. The TBC is a thermal insulator and an electrical insulator (non-electrically conductive). The TBC includes an aerogel material. Aerogels are synthetic, porous ultra-light material derived from a gel, in which the liquid component of the gel has been replaced with a gas. Thus, aerogels are solids with extremely low densities and low thermal conductivities.

Aerogels can be made of a variety of materials or components. The TBC includes an aerogel material, materials, or composites. The aerogel material can include inorganic materials, organic materials, or a combination thereof. Non-limiting examples of suitable inorganic aerogel materials silica, titania, zirconia, alumina, hafnia, yttria, ceria, or any combination thereof. Other non-limiting examples of suitable organic aerogel materials include urethanes, resorcinol formaldehydes, polyimide, polyacrylates, chitosan, polymethyl methacrylate, members of the acrylate family of oligomers, trialkoxysilylterminated polydimethylsiloxane, polyoxyalkylene, polyurethane, polybutadiane, melamine-formaldehyde, phenol-furfural, or any combination thereof. Non-limiting examples of suitable organic-inorganic hybrid hydrogels include silica-PMMA, silica-chitosan, silica-polyether, or any combination thereof.
invention and the practical application, and to enable others of ordinary skill in the art to understand the invention for various embodiments with various modifications as are suited to the particular use contemplated.

While the preferred embodiments to the invention have been described, it will be understood that those skilled in the art, both now and in the future, may make various improvements and enhancements which fall within the scope of the claims which follow. These claims should be construed to maintain the proper protection for the invention first described.

## Claims

1. A thermal primary battery casing, comprising:
a thermal primary battery container; and
a thermal barrier coating (TBC) disposed onto a surface of the thermal primary battery container; wherein the TBC is a thermal insulator and is reinforced with ceramic fibers and
particles; wherein the TBC comprises an aerogel material; and wherein said thermal primary battery container is configured to house a thermal primary battery comprising a plurality of stacked cells.

2. The thermal primary battery casing of claim 1, wherein the TBC has a thickness in a range between 0.79 mm (0.031 inch) and 6.35 mm (0.250 inch).

3. The thermal primary battery casing of claim 1, wherein the TBC is an electrical insulator.

4. The thermal primary battery casing of claim 1, wherein the thermal primary battery container comprises one or more metals.

5. A method of making a thermal primary battery casing, the method comprising:
spraying or casting a TBC onto a surface of a thermal primary battery container;
wherein the TBC is a thermal insulator and it is reinforced with ceramic fibers and particles; wherein the TBC is an aerogel material; and
wherein said thermal primary battery container is configured to house a thermal primary battery comprising a plurality of stacked cells.

6. The method of claim 5, wherein the surface is an interior surface, an exterior surface, or both.

7. The method of claim 5, further comprising disposing the TBC onto a surface of a terminal header.

## Patentansprüche

1. Ein thermisches Primärbatteriegehäuse, umfassend:
einen thermischen Primärbatteriebehälter; und
eine Wärmedämmschicht (TBC), die auf einer Oberfläche des thermischen Primärbatteriebehälters angeordnet ist; wobei die TBC ein Wärmeisolator ist und mit Keramikfasern und -partikeln verstärkt ist; wobei die TBC ein Aerogelmaterial umfasst; und
wobei der thermische Primärbatteriebehälter so konfiguriert ist, dass er eine thermische Primärbatterie mit einer Vielzahl gestapelter Zellen aufnimmt.

2. Das thermische Primärbatteriegehäuse nach Anspruch 1, wobei die TBC eine Dicke im Bereich zwischen 0,79 mm (0,031 Zoll) und 6,35 mm (0,250 Zoll) aufweist.

3. Das thermische Primärbatteriegehäuse nach Anspruch 1, wobei die TBC ein elektrischer Isolator ist.

4. Das thermische Primärbatteriegehäuse nach Anspruch 1, wobei der thermische Primärbatteriebehälter ein oder mehrere Metalle umfasst.

5. Ein Verfahren zur Herstellung eines thermischen Primärbatteriegehäuses, wobei das Verfahren umfasst:
Aufsprühen oder Aufgießen einer TBC auf die Oberfläche eines thermischen Primärbatteriebehälters;
wobei die TBC ein Wärmeisolator ist und mit Keramikfasern und - partikeln verstärkt ist;
wobei die TBC ein Aerogelmaterial ist; und
wobei der thermische Primärbatteriebehälter so konfiguriert ist, dass er eine thermische Primärbatterie mit einer Vielzahl gestapelter Zellen aufnimmt.

6. Verfahren nach Anspruch 5, wobei die Oberfläche eine Innenfläche, eine Außenfläche oder beides ist.

7. Verfahren nach Anspruch 5, ferner umfassend das Anordnen der TBC auf einer Oberfläche eines Anschlusskopfes.

## Revendications

1. Boîtier de batterie primaire thermique, comprenant :
un conteneur de batterie primaire thermique ; et
un revêtement de barrière thermique (TBC) disposé sur une surface du conteneur de batterie primaire thermique ; dans lequel le TBC est un isolant thermique et est renforcé par des fibres et des particules céramiques ; dans lequel le TBC comprend un matériau aérogel ; et dans lequel ledit conteneur de batterie primaire thermique est configuré pour loger une batterie primaire thermique comprenant une pluralité de cellules empilées.

2. Boîtier de batterie primaire thermique selon la revendication 1, dans lequel le TBC a une épaisseur comprise entre 0,79 mm (0,031 pouce) et 6,35 mm (0,250 pouce).

3. Boîtier de batterie primaire thermique selon la revendication 1, dans lequel le TBC est un isolant électrique.

4. Boîtier de batterie primaire thermique selon la revendication 1, dans lequel le conteneur de batterie primaire thermique comprend un ou plusieurs métaux.

5. Procédé de fabrication d'un boîtier de batterie primaire thermique, le procédé comprenant :
la pulvérisation ou la coulée d'un TBC sur une surface d'un conteneur de batterie primaire thermique ;
dans lequel le TBC est un isolant thermique et il est renforcé avec des fibres et des particules céramiques ;
dans lequel le TBC est un matériau aérogel ; et
dans lequel ledit conteneur de batterie primaire thermique est configuré pour loger une batterie primaire thermique comprenant une pluralité de cellules empilées.

6. Procédé selon la revendication 5, dans lequel la surface est une surface intérieure, une surface extérieure ou les deux.

7. Procédé selon la revendication 5, comprenant également la disposition du TBC sur une surface d'un en-tête de terminal.
